# EUROPÄISCHE PATENTSCHRIFT

(11) **EP 4 342 693 B1**
(45) Veröffentlichungstag und Bekanntmachung des Hinweises auf die Patenterteilung: **18.11.2026**
(21) Anmeldenummer: 23191598.4
(22) Anmeldetag: 16.08.2023
(51) Int. Cl.: B60C 23/04

(54) **SYSTEM UND VERFAHREN ZUR BESTIMMUNG DER POSITION VON FAHRZEUGREIFEN**
SYSTEM AND METHOD FOR DETERMINING THE POSITION OF VEHICLE TYRES
SYSTÈME ET PROCÉDÉ DE DÉTERMINATION DE LA POSITION DE PNEUS DE VÉHICULE

(30) Priorität: 22.09.2022 DE 102022209972
(43) Veröffentlichungstag der Anmeldung: 27.03.2024
(73) Patentinhaber: Continental Reifen Deutschland GmbH, 30175 Hannover (DE)
(72) Erfinder: Sahlmüller, Baldo, 30165 Hannover (DE); Mularoni, Nicola, 30165 Hannover (DE); Kliebisch, Sarah, 30165 Hannover (DE)
(74) Vertreter: Continental Corporation

(56) Entgegenhaltungen:
- FR-A1- 3 113 865
- JP-A- 2000 062 420
- US-A1- 2017 282 654

## Beschreibung

Die Erfindung betrifft ein System zur Bestimmung der Position von Fahrzeugreifen in einer Reifenanordnung, ein darauf aufbauendes Fahrzeugsystem und ein zugehöriges Verfahren zur Bestimmung der Position von Fahrzeugreifen mit einem entsprechenden System oder Fahrzeugsystem.

Die fortschreitende technische Entwicklung und die zunehmende Digitalisierung betreffen insbesondere auch den Bereich der Fahrzeugtechnik und der Fahrzeugreifen. Es besteht ein fortgesetztes Interesse daran, bei den in Fahrzeugen eingesetzten Komponenten kontinuierlich Leistungsdaten zu erfassen, um beispielsweise die Leistungsfähigkeit und Betriebssicherheit kontinuierlich zu überwachen. Zu den Informationen, die beispielsweise bei Fahrzeugreifen überwacht werden können, gehören beispielsweise der Reifendruck oder die vom Fahrzeugreifen erfahrene Beschleunigung.

In der Praxis müssen die von in Fahrzeugreifen angeordneten Sensoren gesammelten Informationen jedoch nicht nur erfasst und ausgewertet werden, sondern diese Informationen müssen zudem den jeweiligen Fahrzeugreifen in der Reifenanordnung des Fahrzeuges zugeordnet werden, damit beispielsweise identifiziert werden kann, welcher Fahrzeugreifen einer Reifenanordnung einen Druckabfall zeigt, ohne den Fahrzeugführer zu zwingen, zur Identifikation des schadhaften Fahrzeugreifens alle Fahrzeugreifen manuell zu überprüfen.

Die Zuordnung von Reifensensoren zu den Reifenpositionen am Fahrzeug ist insbesondere bei Nutzfahrzeugen mit mehr als vier Reifen eine sehr komplexe Aufgabe, die noch nicht abschließend zur vollständigen Zufriedenheit gelöst ist.

Im Stand der Technik gibt es insbesondere für Personenfahrzeuge Ansätze, die Signalstärke der Sensoren in Bezug auf einen oder mehrere stationäre Empfänger, die beispielsweise am Fahrzeug oder außerhalb des Fahrzeuges angeordnet sein können, zu nutzen. Allerdings erfordern die aus dem Stand der Technik bekannten Ansätze zumeist die Installation von weiteren Komponenten und werden in vielen Fällen nicht als zuverlässig genug empfunden, gerade bei Fahrzeugen mit mehr als vier Fahrzeugreifen und/oder Zwillingsbereifung, wie sie insbesondere bei Nutzfahrzeugen auftritt.

Stand der Technik zum allgemeinen technologischen Hintergrund ist beispielsweise in der DE 102013202727 A1, der CN 106347041 B, der US 9950577 B1, der DE 102005004825 A1, der US 2017/282654 A1, der FR 3113865 A1, der JP 2000062420 A und der CN 107135040 B offenbart.

Die primäre Aufgabe der vorliegenden Erfindung war es, die Nachteile des Standes der Technik auszuräumen oder zumindest zu verringern.

Insbesondere war es eine Aufgabe der vorliegenden Erfindung, ein System zur Bestimmung der Position von Fahrzeugreifen in einer Reifenanordnung und ein zugehöriges Verfahren anzugeben, mit denen die Position von Fahrzeugreifen in einer Reifenanordnung mit sechs oder mehr Reifen besonders zuverlässig möglich sein sollte, insbesondere auch bei Fahrzeugen mit Zwillingsbereifung.

Hierbei war es eine Aufgabe der vorliegenden Erfindung, dass die Bestimmung der Position von Fahrzeugreifen einen möglichst niedrigen Bedarf an Rechenkapazität erfordern sollte.

Es war eine weitere Aufgabe der vorliegenden Erfindung, dass das für die Bestimmung der Position von Fahrzeugreifen genutzte Verfahren möglichst energieeffizient betreibbar sein sollte, so dass die in Fahrzeugreifen verwendeten Sensoren ohne externe Energieversorgung eine lange Lebensdauer aufweisen können.

Es war eine ergänzende Aufgabe der vorliegenden Erfindung, dass das anzugebende System leicht auf eine Vielzahl von bestehenden Fahrzeugsystemen adaptierbar sein sollte, wobei es wünschenswert war, dass möglichst weitgehend auf bestehende Fahrzeugkomponenten zurückgegriffen werden können sollte. Es war insoweit eine zusätzliche Aufgabe der vorliegenden Erfindung, dass das anzugebende System für seine Umsetzung einen möglichst geringen Bedarf an zusätzlichen Vorrichtungen aufweisen sollte.

Es war eine ergänzende Aufgabe der vorliegenden Erfindung, zudem ein vorteilhaftes Fahrzeugsystem anzugeben, in dem die Position von Fahrzeugreifen in der Reifenanordnung des Fahrzeuges besonders zuverlässig bestimmt werden kann.

Die Erfinder haben nunmehr gefunden, dass sich die vorstehend beschriebenen Aufgaben lösen lassen, wenn die Reifensensoren in einem Netzwerk untereinander kommunizieren, beispielsweise über ein Bluetooth-Netzwerk, das alle Reifensensoren gemeinsam aufspannen, wenn jeder Reifensensor die relative Funkstärke aller anderen Reifensensoren bestimmen kann, wie es in den Ansprüchen definiert ist. Die jeweils bestimmte Funkstärke hängt neben der Stärke des Ausgangssignals, die in der Regel sehr stabil ist, insbesondere vom Abstand des sendenden und des empfangenden Sensors ab. Die erhaltenen Daten werden über eine elektronische Empfangseinheit an eine Auswerteeinheit weitergeleitet. Durch die Bestimmung der relativen Signalstärke der Sensoren zueinander werden in dem aufgespannten Netzwerk sehr viele Abstandsdaten generiert. Diese Daten sind für jeden einzelnen Empfänger nicht unbedingt genau, durch das aufgespannte Netzwerk und die größere Menge an korrelierten Daten kann jedoch eine hohe Genauigkeit erhalten werden. Die Positionszuordnung kann anschließend beispielsweise mit einem Klassifikationsalgorithmus erfolgen, der alle Signalstärkenwerte der Sensoren zueinander und ggf. auch zur Empfangseinheit nutzt.

Die vorstehend genannten Aufgaben werden somit durch den Gegenstand der Erfindung gelöst, wie er in den Ansprüchen definiert ist. Bevorzugte erfindungsgemäße Ausgestaltungen ergeben sich aus den Unteransprüchen und den nachfolgenden Ausführungen.

Solche Ausführungsformen, die nachfolgend als bevorzugt bezeichnet sind, werden in besonders bevorzugten Ausführungsformen mit Merkmalen anderer als bevorzugt bezeichneter Ausführungsformen kombiniert. Ganz besonders bevorzugt sind somit Kombinationen von zwei oder mehr der nachfolgend als besonders bevorzugt bezeichneten Ausführungsformen. Ebenfalls bevorzugt sind Ausführungsformen, in denen ein in irgendeinem Ausmaß als bevorzugt bezeichnetes Merkmal einer Ausführungsform mit einem oder mehreren weiteren Merkmalen anderer Ausführungsformen kombiniert wird, die in irgendeinem Ausmaß als bevorzugt bezeichnet werden. Merkmale bevorzugter Fahrzeugsysteme und Verfahren ergeben sich aus den Merkmalen bevorzugter Systeme.

Die Erfindung betrifft insbesondere ein System zur Bestimmung der Position von Fahrzeugreifen in einer Reifenanordnung, umfassend:
i) sechs oder mehr Systemfahrzeugreifen,
ii) eine zentrale elektronische Empfangseinheit zum Empfangen von Signalen in einem drahtlosen Übertragungsverfahren, und
iii) eine elektronische Auswerteeinheit, mit einer Speichereinheit,

wobei jeder Systemfahrzeugreifen eine elektronische Kommunikationseinheit zum Senden und Empfangen von Signalen in einem drahtlosen Übertragungsverfahren umfasst,
dadurch gekennzeichnet, dass die Kommunikationseinheit jedes Systemfahrzeugreifens dazu eingerichtet ist, in einem Empfangsmodus die von Kommunikationseinheiten anderer Systemfahrzeugreifen in einem Sendemodus gesendeten Signale zu empfangen und deren Signalstärke zu ermitteln,
wobei die Kommunikationseinheit jedes Systemfahrzeugreifens dazu eingerichtet ist, in einem Bestimmungsintervall gemäß einem Sende- und Empfangsschema mehrmals zwischen dem Sendemodus und dem Empfangsmodus zu wechseln,
wobei sich das Sende- und Empfangsschema der Kommunikationseinheit jedes Systemfahrzeugreifens von dem Sende- und Empfangsschema der Kommunikationseinheit sämtlicher anderer Systemfahrzeugreifen unterscheidet, sodass jede Kommunikationseinheit dazu eingerichtet ist, im Bestimmungsintervall Signale der Kommunikationseinheiten sämtlicher anderer Systemfahrzeugreifen zu empfangen,
wobei die Empfangseinheit dazu eingerichtet ist, Signalinformationen über die von den Kommunikationseinheiten der Systemfahrzeugreifen empfangenen Signalstärken der Signale anderer Kommunikationseinheiten an die elektronische Auswerteeinheit zu übermitteln, und
wobei die elektronische Auswerteeinheit dazu eingerichtet ist, aus den Signalinformationen die Position der Systemfahrzeugreifen in der Reifenanordnung zu bestimmen.

Das erfindungsgemäße System ist zur Bestimmung der Position von Fahrzeugreifen in einer Reifenanordnung geeignet. Diese Reifenanordnung kann Teil eines Fahrzeuges sein und entsprechend auf Achsen montierte Fahrzeugreifen umfassen, ist darauf jedoch nicht beschränkt, so dass beispielsweise auch ein Einsatz in anderen Reifenanordnungen denkbar ist, wie sie beispielsweise zum Antrieb von Fahrgeschäften auf Jahrmärkten verwendet werden.

Das System umfasst als Teil einer Reifenanordnung zumindest sechs Systemfahrzeugreifen. Der Ausdruck Systemfahrzeugreifen bringt dabei zum Ausdruck, dass diese Fahrzeugreifen für den Einsatz in dem erfindungsgemäßen System ausgerüstet sind und insbesondere eine elektronische Kommunikationseinheit umfassen. Somit unterscheiden sich die Systemfahrzeugreifen von anderen Fahrzeugreifen, die die entsprechende Funktionalität nicht aufweisen. Der Fachmann versteht, dass das erfindungsgemäße System neben Systemfahrzeugreifen auch weitere Fahrzeugreifen umfassen kann, die beispielsweise über gar keine Sensorik verfügen, beispielsweise in der Form von Reserverädern, dass diese aber nicht in das entsprechende Verfahren zur Bestimmung der Position von Fahrzeugreifen einbezogen werden. Für die meisten Fälle relevant ist dabei ein erfindungsgemäßes System, wobei die Systemfahrzeugreifen Fahrzeugluftreifen sind.

Der Fachmann versteht, dass das erfindungsgemäße System durch die zumindest sechs Systemfahrzeugreifen vor allem für Nutzfahrzeuge interessant ist. Entsprechend wird es sich in der Praxis häufig um ein erfindungsgemäßes System handeln, wobei die Systemfahrzeugreifen Nutzfahrzeugreifen, bevorzugt LKW-Reifen, sind.

Gerade in Reifenanordnungen mit sechs oder mehr Fahrzeugreifen ist die zuverlässige Bestimmung der Reifenposition regelmäßig schwierig. Die damit verknüpften Probleme und Unsicherheiten bei der Zuordnung nehmen bei den aus dem Stand der Technik bekannten Verfahren dabei häufig mit der Zahl der zuzuordnenden Fahrzeugreifen zu. In vorteilhafter Weise erhöht sich in dem erfindungsgemäßen System durch das zwischen den Systemfahrzeugreifen aufgespannte Netzwerk jedoch die Datenmenge, wodurch teilweise sogar eine noch genauere Zuordnung möglich wird. Entsprechend ist ein erfindungsgemäßes System bevorzugt, wobei das System acht oder mehr, bevorzugt zehn oder mehr, Systemfahrzeugreifen umfasst.

Bei den aus dem Stand der Technik bekannten Ansätzen, die versuchen, die Zuordnung der Fahrzeugreifen über die von einer zentralen Einheit bestimmten Signalstärken zu ermitteln, erweist sich insbesondere die zuverlässige Zuordnung von Fahrzeugreifen in Zwillingspaketen einer Zwillingsbereifung als besonders schwierig, da diese sich im Abstand zu der zentralen Einheit und damit in der Signalstärke häufig nur geringfügig unterscheiden. Ähnliches gilt auch für Fahrzeugreifen, die auf unmittelbar benachbarten Achsen angeordnet sind. Bekannterweise kommen beide diese Anordnungen jedoch gerade bei Nutzfahrzeugen wie LKW häufig vor. In vorteilhafter Weise ergibt sich in dem erfindungsgemäßen System durch das zwischen den Systemfahrzeugreifen aufgespannte Netzwerk jedoch eine besonders effiziente Identifikation solcher Fahrzeugreifen, da die Abstände zwischen den Fahrzeugreifen einer Zwillingsbereifung, insbesondere bei beidseitig zwillingsbereiften Achsen, besonders unterschiedlich sind, so dass sich besonders ausgeprägte Unterschiede in den Signalstärken ergeben. Besonders bevorzugt ist entsprechend ein erfindungsgemäßes System, wobei zumindest zwei Systemfahrzeugreifen in der Reifenanordnung einen Abstand zueinander aufweisen, der 20 % oder weniger, bevorzugt 10 % oder weniger, besonders bevorzugt 5 % oder weniger, des größten Abstandes zwischen zwei Systemfahrzeugreifen im System beträgt.

Die Systemfahrzeugreifen umfassen jeweils eine elektronische Kommunikationseinheit zum Senden und Empfangen von Signalen in einem drahtlosen Übertragungsverfahren. Dazu komplementär umfasst das erfindungsgemäße System eine elektronische Empfangseinheit, die mit den elektronischen Kommunikationseinheiten kommunizieren kann. Der Fachmann versteht, dass die Kommunikationseinheiten und die Empfangseinheit entsprechend mit einem aufeinander abgestimmten drahtlosen Übertragungsverfahren arbeiten. Hierbei sind nach Einschätzung der Erfinder insbesondere funkbasierte Verfahren wie beispielsweise Bluetooth geeignet. Bevorzugt ist somit ein erfindungsgemäßes System, wobei die Empfangseinheit eine Funkeinheit zum Empfangen von Signalen mittels Funktechnik ist, bevorzugt mittels Bluetooth, LTE oder 5G, bevorzugt mittels Bluetooth. Bevorzugt ist entsprechend auch ein erfindungsgemäßes System, wobei die elektronischen Kommunikationseinheiten Funkeinheiten zum Senden und Empfangen von Signalen mittels Funktechnik sind, bevorzugt mittels Bluetooth.

Die Kommunikationseinheit jedes Systemfahrzeugreifens ist dazu in der Lage, Signale zu senden und zu empfangen, wobei dies in einem entsprechenden Sendemodus bzw. Empfangsmodus erfolgt, zwischen denen, ggf. unter Einbeziehung sonstiger Modi, im Rahmen eines Sende- und Empfangsschemas gewechselt wird.

Die Kommunikationseinheit jedes Systemfahrzeugreifens ist somit zunächst dazu eingerichtet, zu gegebener Zeit Signale auszusenden. Gleichzeitig ist die Kommunikationseinheit jedes Systemfahrzeugreifens zudem in der Lage, die Signale anderer Systemfahrzeugreifen, bevorzugt sämtlicher anderer Systemfahrzeugreifen, zu empfangen und deren Signalstärke zu bestimmen, wie sie am entsprechenden Systemfahrzeugreifen ankommt. Diese Informationen über die am Systemfahrzeugreifen gemessenen Signalstärken der anderen Kommunikationseinheiten übermittelt die empfangende Kommunikationseinheit anschließend über die Empfangseinheit an die Auswerteeinheit, die die für die Zuordnung notwendigen Rechenoperationen ausführt.

Durch die Kommunikation der Systemfahrzeugreifen wird somit ein Kommunikationsnetzwerk erhalten, welches die Signalinformationen über die von den Kommunikationseinheiten der Systemfahrzeugreifen empfangenen Signalstärken der Signale anderer Kommunikationseinheiten über die Empfangseinheit an die Auswerteeinheit übermittelt.

Die Erfinder haben insoweit erkannt, dass es zum Erhalt eines leistungsfähigen Systems bzw. eines entsprechenden Verfahrens notwendig ist, dass sich die Kommunikationseinheiten sämtlicher Systemfahrzeugreifen in einem Bestimmungsintervall, d.h. innerhalb des Zeitintervalls, in dem das System die Signalinformationen sammelt, um diese anschließend auszuwerten, gegenseitig wahrnehmen können, so dass jede Kommunikationseinheit im Bestimmungsintervall Signalinformationen von jeder anderen Kommunikationseinheit erhalten kann. Gleichzeitig haben die Erfinder erkannt, dass es für die Qualität der Bestimmung und zum Zwecke einer umfassenderen Datenmenge vorteilhaft ist, wenn eine empfangende Kommunikationseinheit nicht zu jedem Zeitpunkt sämtliche anderen Kommunikationseinheiten wahrnimmt. Zudem besteht ein Bedürfnis danach, die Bestimmungsintervalle möglichst kurz halten zu können. Die Erfinder haben nunmehr erkannt, dass das erfindungsgemäße System dafür so ausgelegt werden sollte, dass sich das Sende- und Empfangsschema der Kommunikationseinheit jedes Systemfahrzeugreifens, zumindest geringfügig, von dem Sende- und Empfangsschema der Kommunikationseinheit sämtlicher anderer Systemfahrzeugreifen unterscheidet, sodass jede Kommunikationseinheit dazu eingerichtet ist, im Bestimmungsintervall Signale der Kommunikationseinheiten sämtlicher anderer Systemfahrzeugreifen zu empfangen, wobei der notwendige Grad der Unterschiedlichkeit in der Praxis insbesondere durch die jeweils eingesetzte Elektronik bestimmt werden wird. Bevorzugt ist insoweit ein erfindungsgemäßes System, wobei sich das Sende- und Empfangsschema der Kommunikationseinheit jedes Systemfahrzeugreifens von dem Sende- und Empfangsschema der Kommunikationseinheit sämtlicher anderer Systemfahrzeugreifen durch die Zahl der Phasen im Sendemodus und/oder die Länge der Phasen im Sendemodus und/oder die Anordnung der Phasen im Sendemodus im Bestimmungsintervall unterscheidet.

Wie vorstehend angeführt, kann das Sende- und Empfangsschema auch Phasen enthalten, in denen die Kommunikationseinheit weder sendet noch empfängt. Gerade durch den Einsatz von Phasen mit geringerer Aktivität kann die Lebensdauer der Kommunikationseinheiten vorteilhaft beeinflusst werden. Bevorzugt ist deshalb ein erfindungsgemäßes System, wobei das Sende- und Empfangsschema im Bestimmungsintervall neben Phasen im Sendemodus und Phasen im Empfangsmodus weitere Phasen in einem oder mehreren weiteren Modi umfasst, wobei die weiteren Modi bevorzugt ausgewählt sind aus der Gruppe bestehend aus Sensormodi, Inaktivitätsmodi und Stromsparmodi.

Der Fachmann versteht, dass das erfindungsgemäße System bzw. das erfindungsgemäße Verfahren umso leistungsfähig wird, umso geringer der Einfluss von sonstigen Störfaktoren oder Abweichungen ist, die bei der Bestimmung berücksichtigt werden. Entsprechend sollten nach Einschätzung der Erfinder vermeidbare Störfaktoren bestmöglich vermieden werden. Hierzu zählt insbesondere, dass naturgemäß Sensoren mit möglichst gleichen Ausgangssignalstärken eingesetzt werden sollten, die zweckmäßigerweise auch an möglichst ähnlichen Positionen in den Systemfahrzeugreifen platziert werden sollten. Bevorzugt ist entsprechend ein erfindungsgemäßes System, wobei die elektronischen Kommunikationseinheiten zumindest teilweise, bevorzugt sämtlich, an der gleichen Position des jeweiligen Systemfahrzeugreifens angeordnet sind. Bevorzugt ist hierbei ein erfindungsgemäßes System, wobei die elektronischen Kommunikationseinheiten zumindest teilweise, bevorzugt sämtlich, im Inneren der Systemfahrzeugreifen angeordnet sind, wobei die elektronischen Kommunikationseinheiten bevorzugt an der Reifeninnenschicht befestigt oder in den Gummiwerkstoff eingebettet sind. Bevorzugt ist zusätzlich oder alternativ ein erfindungsgemäßes System, wobei die elektronischen Kommunikationseinheiten dazu eingerichtet sind, im Sendemodus Signale mit einer Ausgangssignalintensität zu senden, die sich zwischen den elektronischen Kommunikationseinheiten der unterschiedlichen Systemfahrzeugreifen um weniger als 10 %, bevorzugt um weniger als 5 %, besonders bevorzugt um weniger als 1 %, ganz besonders bevorzugt um weniger als 0,5 %, unterscheidet.

Im Lichte der vorstehenden Ausführungen kann es als besonderer Vorteil der Erfindung gesehen werden, dass für die Kommunikationseinheiten besonders effizient im Wesentlichen baugleiche Kommunikationseinheiten verwendet werden können, die insbesondere eine besonders gleichmäßige Ausgangssignalintensität bereitstellen können und zudem besonders zeit- und kosteneffizient zu fertigen sind, so dass der Einsatz baugleicher Kommunikationseinheiten auch aus wirtschaftlicher Sicht besonders vorteilhaft ist. Bevorzugt ist entsprechend ein erfindungsgemäßes System, wobei sich die elektronischen Kommunikationseinheiten im Wesentlichen lediglich in ihrem Sende- und Empfangsschema unterscheiden.

Der Fachmann versteht, dass das von den Kommunikationseinheiten gesendete Signal prinzipiell eine beliebige Information umfassen kann, so lange die anderen Kommunikationseinheiten in die Lage versetzt werden, die Signalstärke zu bestimmen. Zweckmäßigerweise kann für das erfindungsgemäße Verfahren beispielsweise das Signal für die Bewertung der Signalstärke verwendet werden, mit dem die Kommunikationseinheiten ohnehin die Signalinformationen über die von ihnen jeweils empfangenen Signalstärken der Signale anderer Kommunikationseinheiten an die Empfangseinheit übermitteln.

Auch wenn eine entsprechende Ausgestaltung zur Bestimmung der Position von Fahrzeugreifen in einer Reifenanordnung geeignet ist, schlagen die Erfinder vor, dass die gesendeten Signale zusätzlich auch Messinformationen über den Zustand des Systemfahrzeugreifens umfassen, die mit einem im Systemfahrzeugreifen angeordneten Sensor gemessen wurden. Bevorzugt ist entsprechend ein erfindungsgemäßes System, wobei die von den Kommunikationseinheiten der Systemfahrzeugreifen im Sendemodus gesendeten Signale Parameterinformationen über den oder die mit den Sensoreinheiten bestimmten Parameter des jeweiligen Systemfahrzeugreifens umfassen.

Der Fachmann versteht, dass die Umsetzung der vorstehend beschriebenen Ausgestaltung das Vorhandensein von Sensoreinheiten erforderlich macht, wobei diese im Rahmen der Erfindung den Kommunikationseinheiten zugeordnet werden, wodurch jedoch nicht ausgedrückt wird, dass die Sensoreinheiten zwangsläufig integraler Bestandteil der Kommunikationseinheiten sein müssen sondern auch eine datenleitende Verbindung zwischen einem Kommunikationselement und einem Sensorelement denkbar ist. Bevorzugt ist entsprechend ein erfindungsgemäßes System, wobei die elektronischen Kommunikationseinheiten zumindest teilweise, bevorzugt sämtlich, eine oder mehrere Sensoreinheiten zur Bestimmung eines oder mehrerer Parameter der Systemfahrzeugreifen umfassen. Bevorzugt ist hierbei ein erfindungsgemäßes System, wobei die eine oder die mehreren Sensoreinheiten ausgewählt sind aus der Gruppe bestehend aus Drucksensoren, Beschleunigungssensoren und Temperatursensoren.

Die Erfinder haben sich die Aufgabe gestellt, die vorstehend beschriebenen Anforderungen an die Umsetzung unterschiedlicher Sende- und Empfangsschema in den Kommunikationseinheiten möglichst effizient umzusetzen, wobei diese Umsetzung bevorzugt auch für baugleiche Kommunikationseinheiten praktikabel sein sollte und idealerweise keine komplexe Programmierung erfordern sollte. Zur Lösung dieser Aufgabe schlagen die Erfinder vor, dass das Sende- und Empfangsschema in Abhängigkeit von randomisierten oder zumindest pseudorandomisierten Zahlen erfolgen kann. Die resultierende zufällige bzw. pseudozufällige Ausgestaltung des Sende- und Empfangsschemas jeder Kommunikationseinheit ermöglicht es effizient und mit geringem Rechenbedarf auch bei kurzen Bestimmungsintervallen ein System zu erhalten, in dem sich die Kommunikationseinheiten sämtlicher Systemfahrzeugreifen gegenseitig wahrnehmen können, wobei zudem erreicht wird, dass eine Kommunikationseinheit nicht zu jedem Zeitpunkt sämtliche anderen Kommunikationseinheiten wahrnimmt. Hierbei ist der Einsatz von Pseudozufallszahlen bevorzugt, da sich diese regelmäßig leichter erhalten lassen und bei einem vorgegebenen Algorithmus zumeist nur ein unterschiedlicher "Seed" gewählt werden muss. Besonders bevorzugt ist entsprechend ein erfindungsgemäßes System, wobei die Kommunikationseinheiten dazu eingerichtet sind, für jedes Bewertungsintervall das Sende- und Empfangsschema, insbesondere die Zahl und/oder die Länge und/oder die Anordnung der Phasen im Sendemodus, in Abhängigkeit von Zufallszahlen oder Pseudozufallszahlen, bevorzugt Pseudozufallszahlen, festzulegen.

Um in einer effizienten Weise einen "Seed" für die Berechnung von Pseudozufallszahlen zu erhalten, schlagen die Erfinder vor, dass in synergistischer Weise die von Sensoreinheiten bestimmten Messwerte verwendet werden können. Bevorzugt ist deshalb ein erfindungsgemäßes System, wobei die Zufallszahlen oder Pseudozufallszahlen, bevorzugt Pseudozufallszahlen, bzw. deren Seed für jeden Systemfahrzeugreifen auf einem oder mehreren Parametern des jeweiligen Systemfahrzeugreifens basieren, die von der einen oder den mehreren Sensoreinheiten bestimmt werden, beispielsweise auf der Temperatur, auf dem Luftdruck oder auf der Beschleunigung.

Für die grundsätzliche Funktionalität bei der Bestimmung der Position von Fahrzeugreifen in einer Reifenanordnung setzt das erfindungsgemäße System auf die Vernetzung der Systemfahrzeugreifen bzw. deren Kommunikationseinheiten. Um eine noch zuverlässigere Bestimmung zu ermöglichen und den für die Berechnung der Positionen notwendigen Rechenaufwand weiter zu senken, schlagen die Erfinder vor, dass auch die Empfangseinheit mit in die Bestimmung einbezogen werden kann, indem auch die von der Empfangseinheit gemessenen Signalstärken berücksichtigt werden. Besonders bevorzugt ist insoweit ein erfindungsgemäßes System, wobei die Empfangseinheit dazu eingerichtet ist, die von Kommunikationseinheiten der Systemfahrzeugreifen in einem Sendemodus gesendeten Signale zu empfangen und deren Signalstärke zu ermitteln, wobei die Empfangseinheit dazu eingerichtet ist, erweiterte Signalinformationen über die von der Empfangseinheit von den Kommunikationseinheiten empfangenen Signalstärken an die elektronische Auswerteeinheit zu übermitteln, wobei die elektronische Auswerteeinheit dazu eingerichtet ist, aus den Signalinformationen und den erweiterten Signalinformationen die Position der Systemfahrzeugreifen in der Reifenanordnung zu bestimmen.

**In** der Praxis ist die Anordnung von Fahrzeugreifen in einem Fahrzeugsystem zumeist symmetrisch. Dadurch ist bedingt, dass es in vielen Fällen zwei Systemfahrzeugreifen geben wird, die sich nur schwer voneinander unterscheiden lassen. Diese Problematik kann vorteilhafterweise dadurch gelöst werden, dass in dem vorstehend beschriebenen bevorzugten erfindungsgemäßen System über die Positionierung der Empfangseinheit eine gezielte Asymmetrie erzeugt wird, durch die die einzelnen Systemfahrzeugreifen einer symmetrischen Reifenanordnung einen unterschiedlichen Abstand zu der Empfangseinheit aufweisen, die infolgedessen eine unterschiedliche Signalstärke detektieren kann. Besonders bevorzugt ist entsprechend ein erfindungsgemäßes System, wobei die Empfangseinheit seitlich neben der Längsachse und/oder der Querachse, bevorzugt neben der Längsachse und der Querachse, der Reifenanordnung angeordnet ist. Bevorzugt ist zusätzlich oder alternativ ein erfindungsgemäßes System, wobei die Empfangseinheit so angeordnet ist, dass sämtliche Systemfahrzeugreifen einen unterschiedlichen Abstand zu der Empfangseinheit aufweisen.

Die Auswerteeinheit ist im erfindungsgemäßen System dazu vorgesehen, die notwendigen Rechenoperationen auszuführen, um aus den Signalinformationen die Position der Systemfahrzeugreifen abzuleiten. Die Auswerteeinheit kann beispielsweise in einem Fahrzeug als Teil eines erfindungsgemäßen Fahrzeugsystems angeordnet sein und beispielsweise auch durch die gleiche elektronische Datenverarbeitungsvorrichtung gebildet werden, die auch die Empfangseinheit steuert. Bevorzugt kann jedoch auch auf eine zentrale Auswerteeinheit zurückgegriffen werden, die die notwendigen Informationen drahtlos von der Empfangseinheit übermittelt bekommt. Bevorzugt ist ein erfindungsgemäßes System, wobei die Empfangseinheit dazu eingerichtet ist, Signalinformationen über die von den Kommunikationseinheiten der Systemfahrzeugreifen empfangenen Signalstärken mit einem drahtlosen Übertragungsverfahren an die elektronische Auswerteeinheit zu übermitteln.

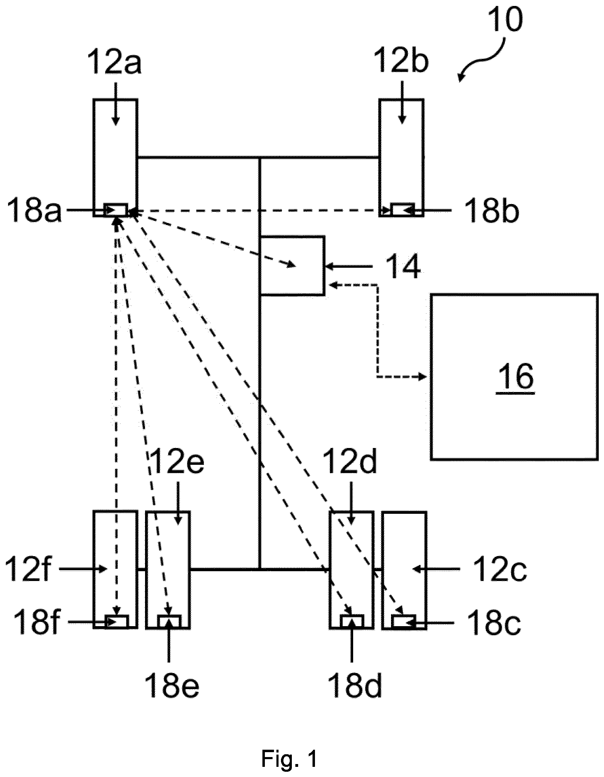

Die Bestimmung der Position von Fahrzeugreifen in der Reifenanordnung durch die Auswerteeinheit ausgehend von den Signalinformationen stellt den Fachmann in der Umsetzung nicht vor übermäßig große Schwierigkeiten. Insbesondere angesichts der zumeist doch noch überschaubaren Zahl von Fahrzeugreifen in typischen Fahrzeugen wird eine endliche Zahl von Datensätzen mit einer endlichen Zahl von Signalstärken erhalten, wobei moderne Datenverarbeitungsvorrichtungen sehr leicht die notwendige Lösung des zugrundeliegenden Logik- bzw. Zuweisungsproblems erhalten können, wie es nachfolgend beispielsweise in Bezug auf Fig. 1 erläutert wird. Neben einfachen iterativen Verfahren können hierbei beispielsweise auch komplexere Zuordnungsverfahren eingesetzt werden, die beispielsweise auf maschinellem Lernen basieren können.

Beispielhaft ist insoweit ein erfindungsgemäßes System, wobei die elektronische Auswerteeinheit dazu eingerichtet ist, die Systemfahrzeugreifen in der Reifenanordnung durch ein iteratives Verfahren zu bestimmen.

Beispielhaft ist auch ein erfindungsgemäßes System, wobei die elektronische Auswerteeinheit dazu eingerichtet ist, aus den von den Kommunikationseinheiten jeweils ermittelten relativen Signalstärken der anderen Kommunikationseinheiten eine geometrische Positionierung zu erzeugen, in der die relativen Abstände der Systemfahrzeugreifen zueinander mit den von den Systemfahrzeugreifen ermittelten Signalstärken bzw. mit den relativen Abnahmen der Signalstärken, korrelieren. Bevorzugt ist dabei ein erfindungsgemäßes System, wobei die elektronische Auswerteeinheit dazu eingerichtet ist, aus den von den Kommunikationseinheiten jeweils ermittelten relativen Signalstärken der anderen Kommunikationseinheiten und aus den von der Empfangseinheit ermittelten relativen Signalstärken der Kommunikationseinheiten eine geometrische Positionierung zu erzeugen, in der die relativen Abstände der Systemfahrzeugreifen zueinander sowie die relativen Abstände der Systemfahrzeugreifen zu der Empfangseinheit mit den von den Systemfahrzeugreifen ermittelten Signalstärken bzw. mit den relativen Abnahmen der Signalstärken, korrelieren.

Der Rechenaufwand kann darüber hinaus weiter minimiert werden, wenn die zumeist ohnehin vorhandenen Informationen über die Fahrwerksausgestaltung als Randbedingung in die Berechnungen einbezogen werden. Bevorzugt ist entsprechend ein erfindungsgemäßes System, wobei die elektronische Auswerteeinheit dazu eingerichtet ist, die Position der Systemfahrzeugreifen unter Berücksichtigung von geometrischen Vorgaben zur Reifenanordnung, bevorzugt vorgegebenen Reifenplätzen, in einem Reifenplan zu bestimmen, und bevorzugt die Systemfahrzeugreifen den vorgegebenen Reifenplätzen zuzuordnen.

Beispielhaft ist auch ein erfindungsgemäßes System, wobei auf der Speichereinheit ein auf maschinellem Lernen basierendes Positionsbestimmungsmodul gespeichert ist, wobei die elektronische Auswerteeinheit dazu eingerichtet ist, die Signalinformationen als Eingabe in das Positionsbestimmungsmodul zu geben und die Position der Systemfahrzeugreifen in der Reifenanordnung zu bestimmen, wobei das Positionsbestimmungsmodul dazu trainiert ist, aus den Signalinformationen der Kommunikationseinheiten von Systemfahrzeugreifen in einer Reifenanordnung, insbesondere aus der relativen Änderung der bestimmten Signalstärke, bevorzugt in Verbindung mit erweiterten Signalinformationen der Empfangseinheit und/oder unter Berücksichtigung von vorgegebenen Reifenplätzen, die Position der Systemfahrzeugreifen in der Reifenanordnung zu bestimmen, wobei das Training mit einem Satz von Trainingsdaten erfolgt, welcher für eine Vielzahl von Reifenanordnungen mit bekannter Position der Systemfahrzeugreifen Signalinformationen, bevorzugt Signalinformationen und erweiterte Signalinformationen, umfasst. Beispielhaft ist insoweit ein erfindungsgemäßes System, wobei das Positionsbestimmungsmodul auf einem Algorithmus zum maschinellen Lernen basiert, der ausgewählt ist aus der Gruppe bestehend aus überwachtem Lernen, bevorzugt ausgewählt ist aus der Gruppe bestehend aus logistischer Regression, Support vector machines, K-nearest neighbors-Verfahren, Entscheidungsbaumverfahren und künstlichen neuronalen Netzen, bevorzugt künstlichen neuronalen Netzen. Bevorzugt ist dabei ein erfindungsgemäßes System, wobei der Satz von Trainingsdaten mit einem vorgegebenen Reifentyp zusammengestellt wird, wobei die Systemfahrzeugreifen zumindest teilweise, bevorzugt sämtlich, dem vorgegebenen Reifentyp entsprechen. Bevorzugt ist zusätzlich oder alternativ ein erfindungsgemäßes System, wobei der Satz von Trainingsdaten mit Fahrzeugreifen eines vorgegebene Reifenherstellers zusammengestellt wird, wobei die Systemfahrzeugreifen zumindest teilweise, bevorzugt sämtlich, vom vorgegebenen Reifenhersteller stammen.

Der Fachmann versteht, dass die Erfindung auch ein Fahrzeugsystem betrifft, in dem die Bestanteile des erfindungsgemäßen Systems so mit einem Fahrzeug kombiniert werden, dass eine Bestimmung der Position von Fahrzeugreifen in dessen Reifenanordnung möglich wird. Die Erfindung betrifft entsprechend ein Fahrzeugsystem, umfassend:
a) ein Fahrzeug, und
b) ein erfindungsgemäßes System zur Bestimmung der Position von Fahrzeugreifen,
wobei die sechs oder mehr Systemfahrzeugreifen des erfindungsgemäßen Systems am Fahrzeug angeordnet sind.

Die bevorzugten Ausgestaltungen des erfindungsgemäßen Fahrzeugsystems resultieren aus den vorstehenden Ausführungen zum erfindungsgemäßen System.

Bei dem Fahrzeug kann es sich prinzipiell um ein angetriebenes oder ein nicht angetriebenes Fahrzeug, beispielsweise einen Anhänger, handeln. Von besonderer Praxisrelevanz ist insoweit ein erfindungsgemäßes Fahrzeugsystem, wobei das Fahrzeug ein Nutzfahrzeug ist, bevorzugt ein LKW oder ein Bus. Denkbar ist insoweit ein erfindungsgemäßes Fahrzeugsystem, wobei das Fahrzeug neben Systemfahrzeugreifen weitere Fahrzeugreifen umfasst, bei denen es sich nicht um Systemfahrzeugreifen handelt. Beispielhaft ist ein erfindungsgemäßes Fahrzeugsystem, wobei das Fahrzeug drei oder mehr Achsen umfasst.

Wegen der synergistischen Vorteile bevorzugt ist ein erfindungsgemäßes Fahrzeugsystem, wobei das Fahrzeugsystem zumindest eine Achse mit drei oder mehr, bevorzugt 4 oder mehr, Systemfahrzeugreifen umfasst.

Bevorzugt ist ein erfindungsgemäßes Fahrzeugsystem, wobei die Empfangseinheit am Fahrzeug angeordnet ist. Besonders bevorzugt ist dabei ein erfindungsgemäßes Fahrzeugsystem, wobei die Empfangseinheit seitlich neben der Längsachse und/oder der Querachse des Fahrzeugs angeordnet ist.

Für Anwendungen, in denen besonders autarke Fahrzeugsysteme wünschenswert sind, beispielsweise in Regionen mit schlechter digitaler Infrastruktur, ist ein erfindungsgemäßes Fahrzeugsystem bevorzugt, wobei die elektronische Auswerteeinheit am Fahrzeug angeordnet ist, wobei die elektronische Auswerteeinheit und die Empfangseinheit bevorzugt durch die gleiche Vorrichtung gebildet werden.

Insbesondere für Anwendungen im Bereich des Flottenmanagements von Nutzfahrzeugflotten bevorzugt ist ein erfindungsgemäßes Fahrzeugsystem, wobei die elektronische Auswerteeinheit durch eine außerhalb des Fahrzeuges befindliche Datenverarbeitungsvorrichtung gebildet wird, bevorzugt durch eine zentrale Datenverarbeitungsvorrichtung eines Netzwerkes oder die Datenverarbeitungsvorrichtung einer lokalen Auswerteeinrichtung.

Die Erfindung betrifft auch ein Verfahren, dessen Funktionsweise sich für den Fachmann aus den vorstehenden Beschreibungen zum erfindungsgemäßen System erschließt, wobei solche Verfahren bevorzugt sind, die die Vorteile bevorzugter erfindungsgemäßer Systeme nutzen.

Die Erfindung betrifft somit insbesondere auch ein Verfahren zur Bestimmung der Position von Fahrzeugreifen mit einem erfindungsgemäßen System oder in dem erfindungsgemäßen Fahrzeugsystem, umfassend für die Kommunikationseinheit jedes Systemfahrzeugreifens im Bestimmungsintervall die Verfahrensschritte:
x1) Senden von Signalen im Sendemodus,
x2) Wechseln vom Sendemodus in den Empfangsmodus gemäß dem Sende- und Empfangsschema der jeweiligen Kommunikationseinheit,
x3) Empfangen von Signalen der Kommunikationseinheit zumindest eines anderen Systemfahrzeugreifens, bevorzugt sämtlicher anderer Systemfahrzeugreifen, und ermitteln der Signalstärke zum Erhalt einer Signalinformation,
sowie die Verfahrensschritte:
   y) Übermitteln von Signalinformationen über die von den Kommunikationseinheiten der Systemfahrzeugreifen empfangenen Signalstärken durch die Empfangseinheit an die elektronische Auswerteeinheit, und
   z) Bestimmen der Position der Systemfahrzeugreifen aus den Signalinformationen mit der elektronischen Auswerteeinheit.

Bevorzugt ist im Lichte der vorstehenden Ausführungen besonders ein erfindungsgemäßes Verfahren, wobei der Verfahrensschritt y) zusätzlich den Schritt:
y2) Übermitteln von erweiterten Signalinformationen über die von der Empfangseinheit empfangenen Signalstärken durch die Empfangseinheit an die elektronische Auswerteeinheit,
umfasst.

Für die Praxis besonders relevant ist ein erfindungsgemäßes Verfahren, wobei das Verfahren im Fahrbetrieb des Fahrzeuges durchgeführt wird. Bevorzugt ist zusätzlich oder alternativ ein erfindungsgemäßes Verfahren, wobei das Verfahren in vorgegebenen zeitlichen Abständen wiederholt wird, um die Position der Systemfahrzeugreifen in der Reifenanordnung zu bestimmen.

Nachfolgend werden die Erfindung und bevorzugte Ausführungsformen der Erfindung unter Bezugnahme auf die beiliegende Figur näher erläutert und beschrieben. Dabei zeigt:
- Fig. 1: eine schematische Konzeptdarstellung eines erfindungsgemäßen Systems in einer bevorzugten Ausführungsform.

Fig. 1 zeigt eine schematische Konzeptdarstellung eines erfindungsgemäßen Systems 10 in einer bevorzugten Ausführungsform, bei dem sechs Systemfahrzeugreifen 12a, 12b, 12c, 12d, 12e, 12f eine Reifenanordnung bilden. Die Systemfahrzeugreifen 12a-f sind an den Achsen eines Fahrzeuges angeordnet, welches eine Achse mit Zwillingsbereifung aufweist und bei dem es sich beispielsweise um einen LKW handeln kann. Somit zeigt Fig. 1 auch ein schematisches Beispiel für ein erfindungsgemäßes Fahrzeugsystem.

In dem beispielhaften System 10 der Fig. 1 umfasst jeder Systemfahrzeugreifen 12a-f genau eine Kommunikationseinheit 18a, 18b, 18c, 18d, 18e, 18f, die über Bluetooth mit der zentralen Empfangseinheit 14 und den anderen Kommunikationseinheiten 18a-f der anderen Systemfahrzeugreifen 12a-f kommuniziert und die abgesehen von ihrem jeweiligen Sende- und Empfangsschema identisch ausgeführt sind.

Die Kommunikationseinheiten 18a-f umfassen im gezeigten Beispiel auch Drucksensoren und durchlaufen jeweils ein individuelles Sende- und Empfangsschema, welches auf der Grundlage von Pseudozufallszahlen generiert wird, die auf den von den Sensoreinheiten gemessenen Druckwerten als "Seed" basieren, wobei die Länge des Bestimmungsintervalls beispielsweise so gewählt werden kann, bis jede Kommunikationseinheit 18a-f im Bestimmungsintervall (n-1)*i Signale mit unterschiedlicher Signalstärke detektiert hat, wobei n die Zahl der Systemfahrzeugreifen 12a-f und i eine ganze Zahl ist, so dass für i > 1 auch Vielfache von n-1 vorgegeben werden können. Bei besonders großen Fahrzeugen kann n beispielsweise auch durch n* ersetzt werden, wobei n* die erwartete Zahl der Systemfahrzeugreifen 12a-f in Senderreichweite der Kommunikationseinheiten 18a-f ist.

Sowohl die Kommunikationseinheiten 18a-f der Systemfahrzeugreifen 12a-f als auch die relativ zur Fahrzeugachse versetzt angeordnete Empfangseinheit 14 registrieren die Signalstärke der jeweils empfangenen Signale, so dass ein Satz von Signalinformationen bzw. erweiterten Signalinformationen erhalten wird, die von der Auswerteeinheit 16 zur Bestimmung der Position der Fahrzeugreifen in der Reifenanordnung verwendet werden können.

Im gezeigten Beispiel der Fig. 1 ist die Auswerteeinheit 16 dabei außerhalb des Fahrzeuges angeordnet und wird durch einen Server gebildet, mit dem die Empfangseinheit 14 beispielsweise über Mobilfunk kommunizieren kann.

In Fig. 1 sind am Beispiel des Systemfahrzeugreifens 12a die Kommunikationspfade mit den übrigen Elementen als gestrichelte Pfeile eingetragen. Das Konzept der Bestimmung der Position von Fahrzeugreifen kann hieran gut nachvollzogen werden, wobei zweckmäßigerweise die schematische Fahrwerksanordnung der Fig. 1 als Randbedingung angenommen wird. Zudem kann angenommen werden, dass die jeweils detektierte Signalstärke mit der Länge der gestrichelten Pfeile korreliert, wobei längere Pfeile schwächeren Signalstärken entsprechen.

Die Kommunikationseinheit 18a des Systemfahrzeugreifens 12a "sieht" im Bestimmungsintervall einen anderen Systemfahrzeugreifen 12b-f im mittleren Abstand und jeweils zwei nahezu gleichweit entfernte Systemfahrzeugreifen 12b-f im weiten und sehr weiten Abstand. Im Lichte der Fahrwerksanordnung ist klar, dass es sich um einen Fahrzeugreifen der Vorderachse handeln muss, die hinsichtlich der Kommunikation mit anderen Systemfahrzeugreifen 12b-f im Wesentlichen das gleiche Signalmuster detektieren. Durch die versetzt angeordnete Empfangseinheit 14 erhält die Auswerteeinheit 16 jedoch zusätzlich die Information, dass der übermittelnde Systemfahrzeugreifen 12a weiter von der Empfangseinheit 14 entfernt liegen muss als der Systemfahrzeugreifen 12b, welcher ansonsten eine im Wesentlichen gleiche Signalinformation übermittelt und entsprechend ebenfalls auf der Vorderachse liegen muss. Entsprechend kann dem Systemfahrzeugreifen 12a die Position vorne links zugewiesen werden. Für die Systemfahrzeugreifen 12c-f der Zwillingsbereifung werden neben den Abständen zur Empfangseinheit 14 auch Signalinformationen zu den Abständen entlang der zwillingsbereiften Achse erhalten, wobei insbesondere durch die hohe Datendichte, die in dem aufgespannten Kommunikationsnetzwerk erhalten wird, eine zuverlässige Zuordnung auch bei relativ kleinen Unterschieden im Signalmuster möglich wird.

### Bezugszeichenliste

- 10: System
- 12a-f: Systemfahrzeugreifen
- 14: Elektronische Empfangseinheit
- 16: Elektronische Auswerteeinheit
- 18a-f: Elektronische Kommunikationseinheit

## Patentansprüche

1. System (10) zur Bestimmung der Position von Fahrzeugreifen in einer Reifenanordnung, umfassend:
i) sechs oder mehr Systemfahrzeugreifen (12a-f),
ii) eine zentrale elektronische Empfangseinheit (14) zum Empfangen von Signalen in einem drahtlosen Übertragungsverfahren, und
iii) eine elektronische Auswerteeinheit (16), mit einer Speichereinheit, wobei jeder Systemfahrzeugreifen (12a-f) eine elektronische Kommunikationseinheit (18a-f) zum Senden und Empfangen von Signalen in einem drahtlosen Übertragungsverfahren umfasst,
wobei die Kommunikationseinheit (18a-f) jedes Systemfahrzeugreifens (12a-f) dazu eingerichtet ist, in einem Empfangsmodus die von Kommunikationseinheiten (18a-f) anderer Systemfahrzeugreifen (12a-f) in einem Sendemodus gesendeten Signale zu empfangen und deren Signalstärke zu ermitteln,
**dadurch gekennzeichnet, dass**
die Kommunikationseinheit (18a-f) jedes Systemfahrzeugreifens (12a-f) dazu eingerichtet ist, in einem Bestimmungsintervall gemäß einem Sende- und Empfangsschema mehrmals zwischen dem Sendemodus und dem Empfangsmodus zu wechseln,
wobei sich das Sende- und Empfangsschema der Kommunikationseinheit (18a-f) jedes Systemfahrzeugreifens (12a-f) von dem Sende- und Empfangsschema der Kommunikationseinheit (18a-f) sämtlicher anderer Systemfahrzeugreifen (12a-f) unterscheidet, sodass jede Kommunikationseinheit (18a-f) dazu eingerichtet ist, im Bestimmungsintervall Signale der Kommunikationseinheiten (18a-f) sämtlicher anderer Systemfahrzeugreifen (12a-f) zu empfangen,
wobei die Empfangseinheit (14) dazu eingerichtet ist, Signalinformationen über die von den Kommunikationseinheiten (18a-f) der Systemfahrzeugreifen (12a-f) empfangenen Signalstärken der Signale anderer Kommunikationseinheiten (18a-f) an die elektronische Auswerteeinheit (16) zu übermitteln, und
wobei die elektronische Auswerteeinheit (16) dazu eingerichtet ist, aus den Signalinformationen die Position der Systemfahrzeugreifen (12a-f) in der Reifenanordnung zu bestimmen.

2. System (10) nach Anspruch 1, wobei die Empfangseinheit (14) eine Funkeinheit zum Empfangen von Signalen mittels Funktechnik ist.

3. System (10) nach einem der Ansprüche 1 oder 2, wobei die Empfangseinheit (14) dazu eingerichtet ist, die von Kommunikationseinheiten (18a-f) der Systemfahrzeugreifen (12a-f) in einem Sendemodus gesendeten Signale zu empfangen und deren Signalstärke zu ermitteln, wobei die Empfangseinheit (14) dazu eingerichtet ist, erweiterte Signalinformationen über die von der Empfangseinheit (14) von den Kommunikationseinheiten (18a-f) empfangenen Signalstärken an die elektronische Auswerteeinheit (16) zu übermitteln, wobei die elektronische Auswerteeinheit (16) dazu eingerichtet ist, aus den Signalinformationen und den erweiterten Signalinformationen die Position der Systemfahrzeugreifen (12a-f) in der Reifenanordnung zu bestimmen.

4. System (10) nach einem der Ansprüche 1 bis 3, wobei die Empfangseinheit (14) seitlich neben der Längsachse und/oder der Querachse der Reifenanordnung angeordnet ist.

5. System (10) nach einem der Ansprüche 1 bis 4, wobei die elektronischen Kommunikationseinheiten (18a-f) zumindest teilweise eine oder mehrere Sensoreinheiten zur Bestimmung eines oder mehrerer Parameter der Systemfahrzeugreifen (12a-f) umfassen.

6. System (10) nach Anspruch 5, wobei die von den Kommunikationseinheiten (18a-f) der Systemfahrzeugreifen (12a-f) im Sendemodus gesendeten Signale Parameterinformationen über den oder die mit den Sensoreinheiten bestimmten Parameter des jeweiligen Systemfahrzeugreifens umfassen.

7. System (10) nach einem der Ansprüche 1 bis 6, wobei sich die elektronischen Kommunikationseinheiten (18a-f) lediglich in ihrem Sende- und Empfangsschema unterscheiden.

8. System (10) nach einem der Ansprüche 1 bis 7, wobei die Kommunikationseinheiten (18a-f) dazu eingerichtet sind, für jedes Bewertungsintervall das Sende- und Empfangsschema in Abhängigkeit von Zufallszahlen oder Pseudozufallszahlen festzulegen.

9. Fahrzeugsystem, umfassend:
a) ein Fahrzeug, und
b) ein System (10) zur Bestimmung der Position von Fahrzeugreifen nach einem der Ansprüche 1 bis 8,
wobei die sechs oder mehr Systemfahrzeugreifen (12a-f) des Systems (10) am Fahrzeug angeordnet sind.

10. Verfahren zur Bestimmung der Position von Fahrzeugreifen mit einem System (10) nach einem der Ansprüche 1 bis 8 oder in einem Fahrzeugsystem nach Anspruch 9, umfassend für die Kommunikationseinheit (18a-f) jedes Systemfahrzeugreifens (12a-f) im Bestimmungsintervall die Verfahrensschritte:
x1) Senden von Signalen im Sendemodus,
x2) Wechseln vom Sendemodus in den Empfangsmodus gemäß dem Sende- und Empfangsschema der jeweiligen Kommunikationseinheit (18a-f),
x3) Empfangen von Signalen der Kommunikationseinheit (18a-f) zumindest eines anderen Systemfahrzeugreifens (12a-f) und ermitteln der Signalstärke zum Erhalt einer Signalinformation,
sowie die Verfahrensschritte:
y) Übermitteln von Signalinformationen über die von den Kommunikationseinheiten (18a-f) der Systemfahrzeugreifen (12a-f) empfangenen Signalstärken durch die Empfangseinheit (14) an die elektronische Auswerteeinheit (16), und
z) Bestimmen der Position der Systemfahrzeugreifen (12a-f) aus den Signalinformationen mit der elektronischen Auswerteeinheit (16).

## Claims

1. System (10) for determining the position of vehicle tyres in a tyre arrangement, comprising:
i) six or more system vehicle tyres (12a-f),
ii) a central electronic receiving unit (14) for receiving signals in a wireless transmission process, and
iii) an electronic evaluation unit (16) with a storage unit,
wherein each system vehicle tyre (12a-f) comprises an electronic communication unit (18a-f) for transmitting and receiving signals in a wireless transmission process,
wherein the communication unit (18a-f) of each system vehicle tyre (12a-f) is designed to receive in a receiving mode the signals transmitted by communication units (18a-f) of other system vehicle tyres (12a-f) in a transmitting mode and to determine their signal strength,
**characterized in that**
the communication unit (18a-f) of each system vehicle tyre (12a-f) is designed to change over one or more times between the transmitting mode and the receiving mode in a determining interval according to a transmitting and receiving scheme, wherein the transmitting and receiving scheme of the communication unit (18a-f) of each system vehicle tyre (12a-f) differs from the transmitting and receiving scheme of the communication unit (18a-f) of all the other system vehicle tyres (12a-f), so that each communication unit (18a-f) is designed to receive signals of the communication units (18a-f) of all the other system vehicle tyres (12a-f) in the determining interval,
wherein the receiving unit (14) is designed to transmit signal information concerning the signal strengths of the signals of other communication units (18a-f) received from the communication units (18a-f) of the system vehicle tyres (12a-f) to the electronic evaluation unit (16), and
wherein the electronic evaluation unit (16) is designed to determine from the signal information the position of the system vehicle tyres (12a-f) in the tyre arrangement.

2. System (10) according to Claim 1, wherein the receiving unit (14) is a radio unit for receiving signals by means of radio technology.

3. System (10) according to either of Claims 1 and 2, wherein the receiving unit (14) is designed to receive the signals transmitted by communication units (18a-f) of the system vehicle tyres (12a-f) in a transmitting mode and to determine their signal strength, wherein the receiving unit (14) is designed to transmit extended signal information concerning the signal strengths received by the receiving unit (14) from the communication units (18a-f) to the electronic evaluation unit (16), wherein the electronic evaluation unit (16) is designed to determine from the signal information and the extended signal information the position of the system vehicle tyres (12a-f) in the tyre arrangement.

4. System (10) according to one of Claims 1 to 3, wherein the receiving unit (14) is arranged laterally alongside the longitudinal axis and/or the transverse axis of the tyre arrangement.

5. System (10) according to one of Claims 1 to 4, wherein the electronic communication units (18a-f) at least partially comprise one or more sensor units for determining one or more parameters of the system vehicle tyres (12a-f).

6. System (10) according to Claim 5, wherein the signals transmitted by the communication units (18a-f) of the system vehicle tyres (12a-f) in the transmitting mode comprise parameter information concerning the parameter or parameters of the respective system vehicle tyre determined by the sensor units.

7. System (10) according to one of Claims 1 to 6, wherein the electronic communication units (18a-f) differ only in their transmitting and receiving scheme.

8. System (10) according to one of Claims 1 to 7, wherein the communication units (18a-f) are designed to define the transmitting and receiving scheme for each assessment interval in dependence on random numbers or pseudo-random numbers.

9. Vehicle system, comprising:
a) a vehicle, and
b) a system (10) for determining the position of vehicle tyres according to one of Claims 1 to 8,
wherein the six or more system vehicle tyres (12a-f) of the system (10) are arranged on the vehicle.

10. Method for determining the position of vehicle tyres with a system (10) according to one of Claims 1 to 8 or in a vehicle system according to Claim 9, comprising, for the communication unit (18a-f) of each system vehicle tyre (12a-f) in the determining interval, the method steps of:
x1) transmitting signals in transmitting mode,
x2) changing over from the transmitting mode to the receiving mode according to the transmitting and receiving scheme of the respective communication unit (18a-f),
x3) receiving signals of the communication unit (18a-f) of at least one other system vehicle tyre (12a-f) and determining the signal strength to obtain signal information,
and the method steps of:
y) transmitting signal information concerning the signal strengths received from the communication units (18a-f) of the system vehicle tyres (12a-f) by the receiving unit (14) to the electronic evaluation unit (16), and
z) determining the position of the system vehicle tyres (12a-f) from the signal information by means of the electronic evaluation unit (16).

## Revendications

1. Système (10) destiné à définir la position de pneus de véhicule dans un ensemble de pneus, comprenant :
i) six pneus de véhicule de système ou plus (12a-f),
ii) une unité de réception électronique centrale (14) destinée à recevoir des signaux dans un procédé de transmission sans fil, et
iii) une unité électronique d'évaluation (16), avec une unité de mémorisation, chaque pneu de véhicule de système (12a-f) comprenant une unité de communication électronique (18a-f) destinée à envoyer et à recevoir des signaux dans un procédé de transmission sans fil,
l'unité de communication (18a-f) de chaque pneu de véhicule de système (12a-f) étant mise au point pour recevoir dans un mode de réception les signaux envoyés par des unités de communication (18a-f) d'autres pneus de véhicule de système (12a-f) dans un mode d'envoi et pour déterminer leur intensité de signal, **caractérisé en ce que**
l'unité de communication (18a-f) de chaque pneu de véhicule de système (12a-f) est mise au point pour passer plusieurs fois entre le mode d'envoi et le mode de réception à un intervalle de définition selon un schéma d'envoi et de réception,
le schéma d'envoi et de réception de l'unité de communication (18a-f) de chaque pneu de véhicule de système (12a-f) différant du schéma d'envoi et de réception de l'unité de communication (18a-f) de tous les autres pneus de véhicule de système (12a-f), si bien que chaque unité de communication (18a-f) est mise au point pour recevoir des signaux des unités de communication (18a-f) de tous les autres pneus de véhicule de système (12a-f) dans l'intervalle de définition,
l'unité de réception (14) étant mise au point pour transmettre à l'unité électronique d'évaluation (16) des informations de signaux relatives aux intensités de signaux des signaux d'autres unités de communication (18a-f) reçues par les unités de communication (18a-f) des pneus de véhicule de système (12a-f), et
l'unité électronique d'évaluation (16) étant mise au point pour définir la position des pneus de véhicule de système (12a-f) dans l'ensemble de pneus à partir des informations de signaux.

2. Système (10) selon la revendication 1, l'unité de réception (14) étant une unité radio destinée à recevoir des signaux au moyen d'une technologie radio.

3. Système (10) selon l'une des revendications 1 ou 2, l'unité de réception (14) étant mise au point pour recevoir les signaux envoyés par des unités de communication (18a-f) des pneus de véhicule de système (12a-f) dans un mode d'envoi et pour déterminer leur intensité de signal, l'unité de réception (14) étant mise au point pour transmettre des informations de signaux avancées concernant les intensités de signal reçues par l'unité de réception (14) des unités de communication (18a-f) à l'unité électronique d'évaluation (16), l'unité électronique d'évaluation (16) étant mise au point pour définir la position des pneus de véhicule de système (12a-f) dans l'ensemble de pneus à partir des informations de signaux et des informations de signaux avancées.

4. Système (10) selon l'une des revendications 1 à 3, l'unité de réception (14) étant disposée latéralement à côté de l'axe longitudinal et/ou de l'axe transversal de l'ensemble de pneus.

5. Système (10) selon l'une des revendications 1 à 4, les unités de communication électroniques (18a-f) comprenant au moins en partie une ou plusieurs unités de capteur pour définir un ou plusieurs paramètres des pneus de véhicule de système (12a-f).

6. Système (10) selon la revendication 5, les signaux envoyés par les unités de communication (18a-f) des pneus de véhicule de système (12a-f) dans le mode d'envoi comprenant des informations de paramètre concernant le ou les paramètres définis avec les unités de capteur du pneu de véhicule de système respectif.

7. Système (10) selon l'une des revendications 1 à 6, les unités de communication électroniques (18a-f) ne diffèrent que par leur schéma d'envoi et de réception.

8. Système (10) selon l'une des revendications 1 à 7, les unités de communication (18a-f) étant mises au point pour fixer pour chaque intervalle d'évaluation le schéma d'envoi et de réception en fonction de nombres aléatoires ou de nombres pseudo-aléatoires.

9. Système de véhicule, comprenant :
a) un véhicule, et
b) un système (10) destiné à définir la position de pneus de véhicule selon l'une des revendications 1 à 8,
les six pneus de véhicule de système (12a-f) ou plus du système (10) étant disposés sur le véhicule.

10. Procédé de définition de la position de pneus de véhicule avec un système (10) selon l'une des revendications 1 à 8 ou dans un système de véhicule selon la revendication 9, comprenant, pour l'unité de communication (18a-f) de chaque pneu de véhicule de système (12a-f) dans l'intervalle de définition, les étapes de procédé :
x1) envoi de signaux dans le mode d'envoi,
x2) passage du mode d'envoi au mode de réception selon le schéma d'envoi et
de réception de l'unité de communication (18a-f) respective,
x3) réception de signaux de l'unité de communication (18a-f) d'au moins un autre pneu de véhicule de système (12a-f) et détermination de l'intensité de signal pour l'obtention d'informations de signaux,
ainsi que les étapes de procédé :
y) transmission d'informations de signaux concernant les intensités de signal reçues des unités de communication (18a-f) des pneus de véhicule de système (12a-f) par l'unité de réception (14) à l'unité électronique d'évaluation (16), et
z) définition de la position des pneus de véhicule de système (12a-f) à partir des informations de signaux avec l'unité électronique d'évaluation (16).
